# EUROPEAN PATENT APPLICATION

(11) **EP 1 201 385 A1**
(43) Date of publication of application: **02.05.2002**
(21) Application number: 01203281.9
(22) Date of filing: 31.08.2001
(51) Int. Cl.: B28D 1/04, B23D 45/10, B23D 59/00, B23D 45/02

(54) **Device for cutting large-format tiles**

(30) Priority: 17.10.2000 IT RE000099
(71) Applicant: Sacmi-Cooperativa Meccanici Imola-Soc. Coop. A.R.L., 40026 Imola (Bologna) (IT)
(72) Inventor: Ricci, Claudio, c/o Sacmi-Cooperativa Meccanici, 40026 Imola (Bologna) (IT)
(74) Representative: Corradini, Corrado

(57) **Abstract**

Tile cutting device (1) comprises a height-positionable frame (4) positioned transversely above the translating support surface (2) on which at least one tile (3) to be sectioned is positioned, there being associated with said frame (4) at least one cutting implement (7) provided with at least one cutting blade (or wheel) (10) rotated by a suitable motor (18); said cutting implement (7) can be translationally moved horizontally relative to said frame (4) by suitable positioning means, in order to be located in the desired position for cutting said tile (3).

## Description

This invention relates to a device for cutting large-format tiles.

Pressing plants are known able to form large-format tiles, of the order of 1 x 2 m, which are usually reduced to tiles of smaller dimensions. For this purpose a device is known described in patent application No. RE99A000061, in the name of the same applicant.

Essentially, said device comprises a usual conveyor belt on which a large-format tile is positioned. Above the conveyor belt there is at least one cutting unit provided with two shafts transverse to the belt advancement direction, each being rotated by an electric motor. On each of said shafts there are fixed a series of spaced-apart blades, the blades of each shaft being aligned with the blades of the other shaft. The purpose of the blades of the first shaft is to incise the tile advancing on the belt, the purpose of the second blades being to separate said tile into tiles (or tesserae) of smaller dimensions.

Although the known device suitably performs its task, it is extremely rigid, insufficiently versatile and uncomfortable to adjust when changing the position of the blades, which have to be carefully aligned with each other, i.e. rigorously coplanar in pairs.

The object of the present invention is to overcome the drawbacks of the known art within the framework of a rational and reliable solution.

The invention attains said object by providing an improved device for cutting large-format tiles.

The device of the invention comprises at least one cutting unit positioned above a translating support surface on which the large- format tile to be sectioned lies.

Said at least one cutting unit supports a plurality of cutting implements. According to the invention each of said cutting implements can be positioned along a direction transverse to the tile advancement direction, to be able to section the large-format tile into a series of tiles or tesserae of smaller dimensions, which can also be different from each other.

Each of said cutting implements is transversely positioned by suitable actuator means, which are controlled by the operator via a processor on the basis of the position of each tool relative to the underlying tile to be cut.

Each of said cutting implements comprises at least one rotary cutting blade (or wheel) driven by a motor rigid with said implement.

In a preferred embodiment, in addition to said at least one cutting blade (or wheel), each implement also comprises at least one incision blade (or wheel), both blades (or wheels) being positioned in series and lying in the same vertical plane perpendicular to the tile advancement direction.

The purpose of the incision blade (or wheel) is to create a depression in the tile surface, the purpose of the cutting blade (or wheel) being to separate the tiles, exactly at the centre of said depression, into tesserae (or tiles) of smaller dimensions. To this end, the incision blade is adjustable in height relative to said cutting blade.

By virtue of the invention the cutting blades can be positioned rapidly and precisely, and the incision blades, if present, are certain to be perfectly coplanar with the cutting blades.

The special characteristics of the invention are defined in the claims.

The constructional and operational merits of the invention will be better understood from the description of a preferred embodiment thereof given hereinafter by way of non-limiting example with reference to the accompanying drawings.

Figure 1 is a partly sectional schematic view from above showing a sectioning assembly provided with the device of the invention.

Figure 2 is a partly sectional plan view of one of the cutting units of the invention.

Figure 3 is a partly sectional view in the direction III of Figure 2.

Figure 4 is a schematic view in the direction IV of Figure 1.

Figure 5 is a plan view of a pair of sectioning assemblies of the invention.

Figure 6 is a view in the direction VI of Figure 5.

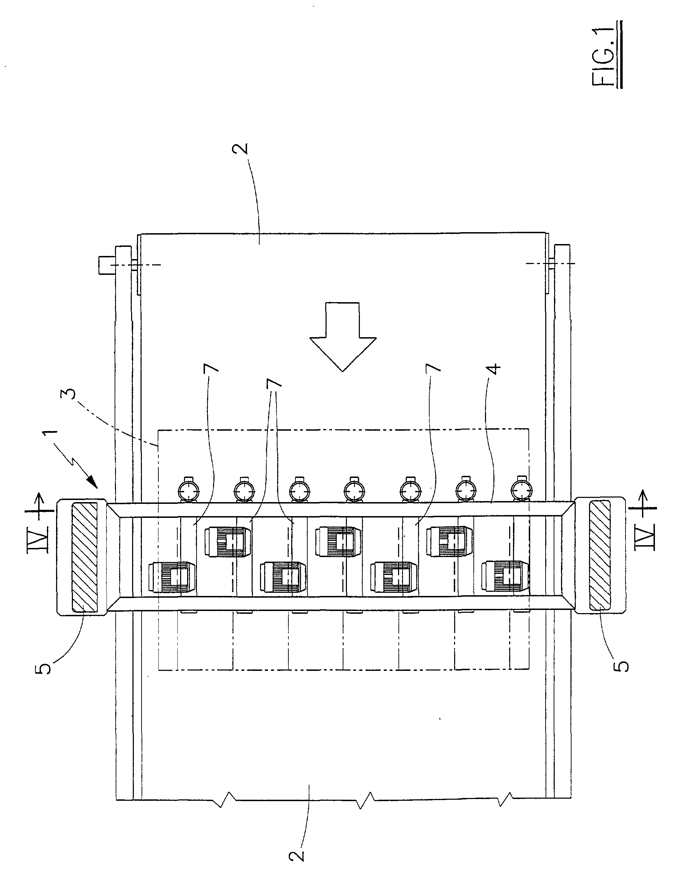

Figure 1 shows the device 1, positioned above a motor-driven conveyor belt 2, on which the tile 3 rests.

The front edge of the tile 3 is perpendicular to the advancement direction of the conveyor belt 2, and is parallel to the axis of the device 1.

The device 1 comprises a frame 4 supported by a portal structure, the uprights 5 of which are shown in Figure 1. The frame 4 can be made to translate vertically relative to said portal structure by usual means, not shown, of known type.

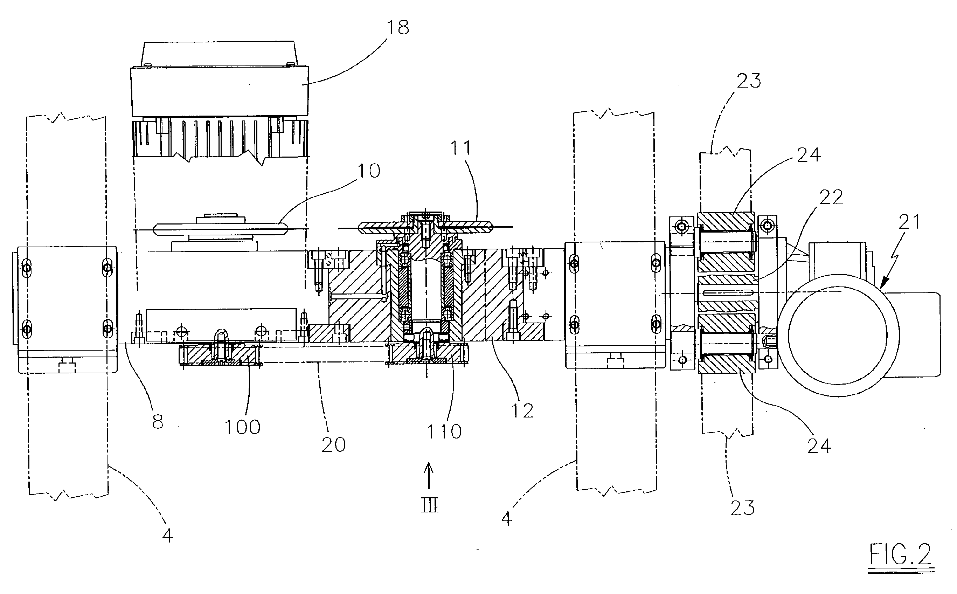

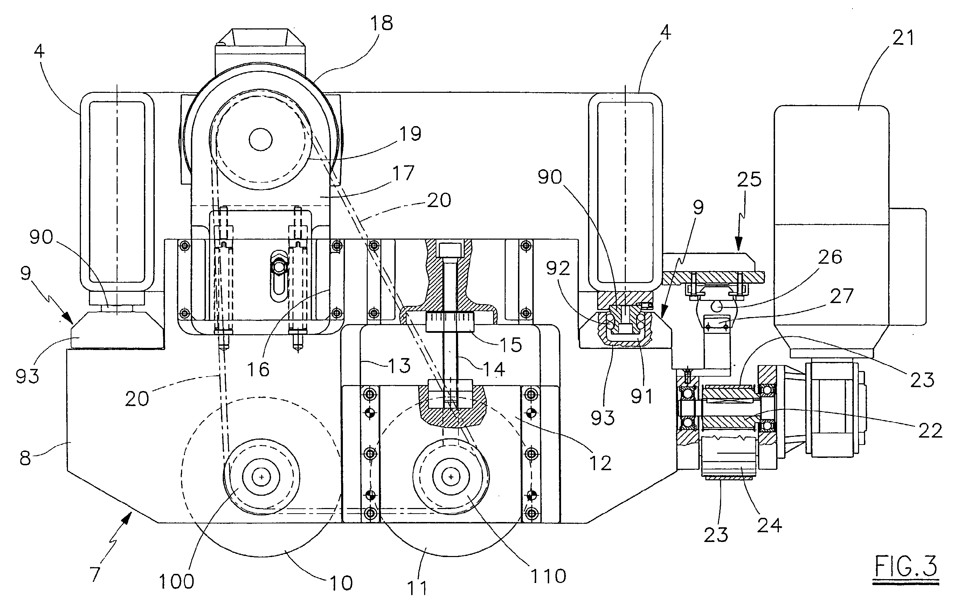

The frame 4 supports a plurality of cutting implements 7, each of which can translate horizontally relative to the frame 4, to be set in the desired cutting position. In detail, as shown in Figures 2 and 3, each of said cutting implements 7 comprises a casing 8 secured to the frame 4 by two circulating ball guides 9. The longitudinal rail 90 of each of said circulating ball guides is fixed to the underside of the frame 4 and is received, by way of interposed balls 92, in a seat 91 present in a part 93 rigid with the casing 8.

The casing 8 supports two wheels, indicated by 10 and 11 respectively, of which the wheel 10 is the cutting wheel and the wheel 11 is the incision wheel.

The purpose of the wheel 11 is to incise the tile to a determined depth adjustable by the operator by the means described hereinafter. The purpose of the wheel 10 is to separate the tile along the incisions formed by the wheel 11.

The wheel 11 can be adjusted in height relative to the wheel 10. For this purpose it is fixed to a part 12 received in a recess 13 in the casing 8. Said part 12 is supported by the casing 8 via a screw 14 provided with a ring nut 15 by which the operator can adjust the height of the wheel 11.

The casing 8 upperly presents a second recess 16 receiving a turret 17 supporting the motor 18 which rotates the wheels 10 and 11. A drive pulley 19 is fixed on the shaft of the motor 18, to drive, by means of a belt 20, pulleys 100 and 110 fixed to the wheels 10 and 11 respectively.

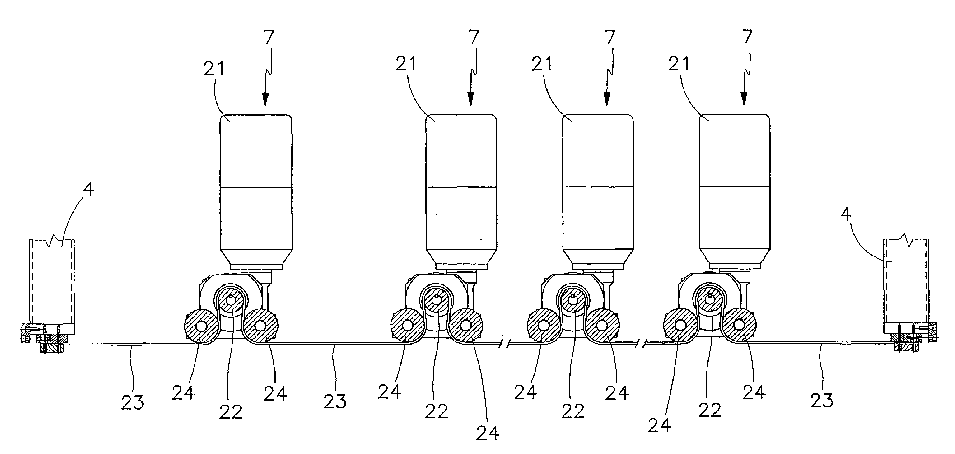

Each of the cutting implements 7 can translate horizontally relative to the support frame 4. For this purpose, with reference to Figure 4, each implement 7 is provided with a geared electric motor 21 rigid with the casing 8.

The geared motor 21 is of the known controlled advancement type.

On the shaft of the electric motor 21 there is fixed a sprocket wheel 22 engaging the teeth of a toothed belt 23, the ends of which are fixed to the ends of the frame 4. Said belt 23 engages all the sprocket wheels 22 of the implements 7.

To the side of the sprocket wheel 22 there are provided two idle deviating wheels 24, which form an obligatory path for the belt 23.

The position of each of the cutting implements 7 is controlled by a processor, not shown, on the basis of the signal obtained from an absolute position transducer 25 consisting of an element 26 fixed to the frame and a plurality of magnetic sensors 27 rigid with each of the cutting implements 7.

The position of the magnetic sensors 27 is transmitted to the processor by way of said fixed element 26, which is generally in the form of a rod. These transducers are known, and will therefore not be described in detail.

The invention operates in the following manner. With reference to Figure 1, by means of the processor the operator initially sets the desired position of the cutting implements 7 on the basis of the dimensions of the tesserae to be obtained by sectioning the tile 3. The processor then controls the geared motors 21 to position the implements 7.

The conveyor belt 2 is then operated to feed the tile to the sectioning device 1.

As the tile gradually advances below the device 1, the cutting implements separate the tiles into tesserae of smaller dimensions. Specifically, the wheels 11 incise the tile 3, the action of the successive wheels 10 then separating the various tesserae.

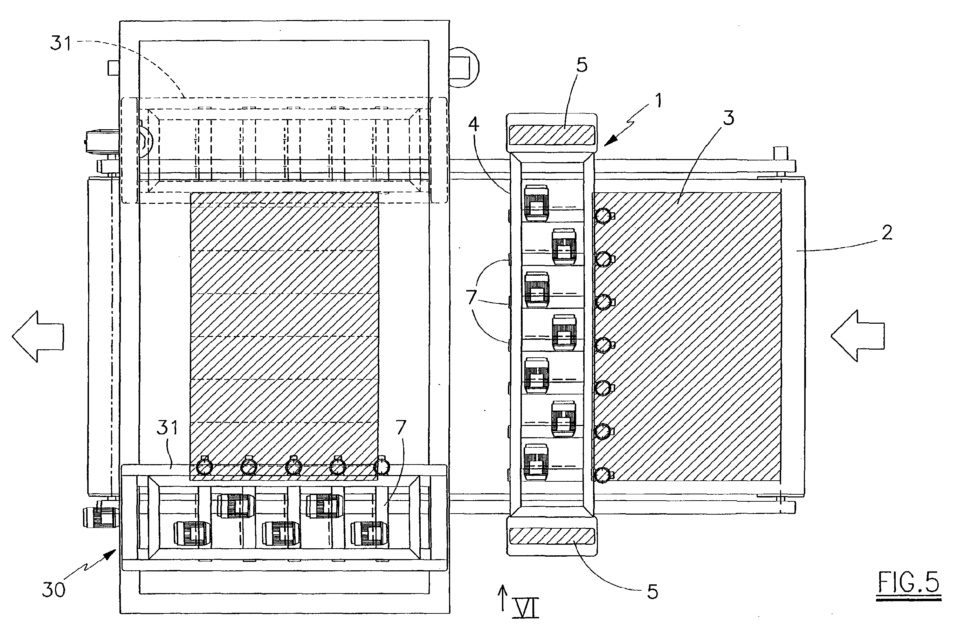

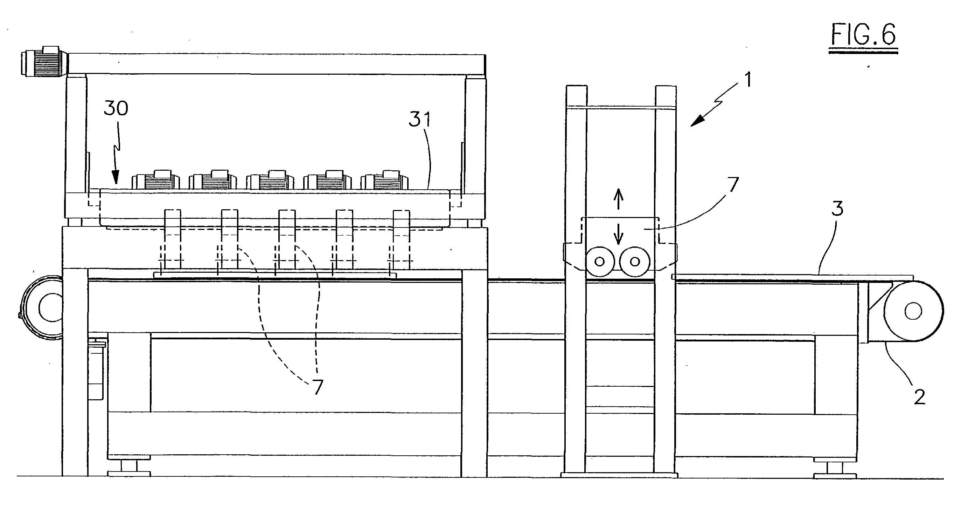

With reference to Figures 5 and 6, the invention illustrated in Figures 1 to 4 is coupled to a second unit making cuts and incisions in a direction perpendicular to those of the device 1.

Said second unit, indicated by the reference numeral 30, differs from the preceding in that the surface on which the tile rests is fixed during the cutting operation, whereas the frame 32 supporting the cutting implements 7 translates in a direction perpendicular to the direction of advancement of the belt 2.

## Claims

1. A tile cutting device comprising a height-positionable frame positioned transversely above the translating support surface on which at least one tile to be sectioned is positioned, there being associated with said frame at least one cutting implement provided with at least one cutting blade (or wheel) rotated by a suitable motor, **characterised in that** said cutting implement can be translationally moved horizontally relative to said frame by suitable positioning means, in order to be located in the desired position for cutting said tile.

2. A device as claimed in claim 1, **characterised in that** said at least one cutting implement also comprises at least one rotary incision blade (or wheel) disposed in series with said cutting blade and lying in the plane in which said cutting blade lies.

3. A device as claimed in claim 2, **characterised in that** said cutting implement comprises means for adjusting the height of the incision blade.

4. A device as claimed in claim 2, **characterised in that** said at least two cutting and incision blades are driven by a single motor.

5. A device as claimed in claim 1, **characterised in that** the position of said at least one cutting implement relative to said frame is controlled by a processor on the basis of the implement position determined by a suitable position transducer.

6. A device as claimed in claim 5, **characterised in that** said transducer is an absolute position transducer of magnetostriction type.

7. A device as claimed in one or more of the preceding claims, **characterised by** comprising a plurality of cutting implements individually associated with the position transducer.

8. A device as claimed in claims 6 and 7, **characterised in that** the position of each cutting implement forming part of said plurality of cutting implements is controlled by a processor on the basis of the value read by said position transducer.

9. A device as claimed in claim 1, **characterised in that** said tile support surface is a conveyor belt.

10. A device as claimed in one or more of the preceding claims, **characterised in that** each cutting implement comprises a processor- controlled geared motor of controlled advancement type driving a pulley about which there passes a portion of a common toothed belt which involves all the cutting implements and extends between the ends of the frame in a direction perpendicular to the tile advancement direction.

11. A device as claimed in claim 1, **characterised by** comprising two support frames for said cutting implements, said frames being mutually perpendicular and parallel to the support surface for said at least one tile.

12. A device as claimed in claim 11, **characterised in that** at least one of said frames translates in a direction transverse to the tile support surface.
